# EUROPÄISCHE PATENTSCHRIFT

(11) **EP 0 803 027 B1**
(45) Veröffentlichungstag und Bekanntmachung des Hinweises auf die Patenterteilung: **20.03.2002**
(21) Anmeldenummer: 96931751.0
(22) Anmeldetag: 14.08.1996
(51) Int. Cl.: F02M 53/06, F02M 69/04, F02M 31/18

(54) **KRAFTSTOFFEINSPRITZVORRICHTUNG FÜR EINEN VERBRENNUNGSMOTOR**
FUEL INJECTION DEVICE FOR AN INTERNAL COMBUSTION ENGINE
DISPOSITIF D'INJECTION DE CARBURANT POUR MOTEUR A COMBUSTION INTERNE

(30) Priorität: 14.11.1995 DE 19542317
(43) Veröffentlichungstag der Anmeldung: 29.10.1997
(73) Patentinhaber: ROBERT BOSCH GMBH, 70442 Stuttgart (DE)
(72) Erfinder: KROHN, Klaus-Henning, D-96047 Bamberg (DE); VIEWEG, Ulrich, D-90489 Nürnberg (DE); VOGEL, Christof, D-96120 Bischberg (DE); LIEBEMANN, Edwin, Anderson, SC 29629 (US); THOMAS, Mathias, D-96169 Lauter-Appendorf (DE)
(74) Vertreter: Knetsch, Manfred
(86) Internationale Anmeldenummer: DE9601512
(87) Internationale Veröffentlichungsnummer: WO9718390

(56) Entgegenhaltungen:
- WO-A-96/24764
- DE-A- 2 843 534
- DE-A- 19 504 175
- DE-C- 841 973
- FR-A- 2 174 504
- GB-A- 1 282 016
- GB-A- 2 147 357
- US-A- 4 137 872

## Beschreibung

Die Erfindung betrifft eine Kraftstoffeinspritzvorrichtung für einen Verbrennungsmotor nach dem Oberbegriff des Anspruchs 1.

### STAND DER TECHNIK

Bei einer derartigen bekannten Kraftstoffeinspritzvorrichtung (GB 2 281 101 A) weist ein Kraftstoffverdampfer eine Verdampferkammer auf, in die durch eine Einlaßöffnung von einem Einspritzventil Kraftstoff eingespritzt wird. In der Verdampferkammer ist eine gewöhnliche Glühkerze angeordnet, die im beheizten Zustand eine Verdampfung des Kraftstoffs bewirkt. Der in der Verdampferkammer gebildete Kraftstoffdampf kann zusammen mit Luft, die durch einen entsprechenden Lufteinlaß in die Verdampferkammer einströmt, durch eine kleine Düse in den Einlaßbereich einer nachgeordneten Brennkammer eines Verbrennungsmotors ausströmen.

Wird nach einem Kaltstart nach Beendigung der Warmlaufphase die Glühkerze abgeschaltet, so erfolgt der Kraftstoffaustrag durch die Verdampferkammer hindurch nur noch aufgrund der durch die Verdampferkammer strömenden, vom Verbrennungsmotor angesaugten Luft, wobei durch die kleine Düse eine Zerstäubung des Kraftstoffs erreicht werden soll.

Bei einer anderen bekannten Kraftstoffeinspritzvorrichtung (DE 28 43 534 A1) ist saugrohrseitig vor der Abspritzöffnung im Kraftstoffaustrittsbereich eines Einspritzventils ein Heizelement mit Verdampferflächen angeordnet, auf die zu verdampfender Kraftstoff aufgespritzt wird. Ein vom Heizelement festgelegter Verdampferbereich ist dabei auslaßseitig offen. Bei dieser bekannten Kraftstoffeinspritzvorrichtung kann zur Verbesserung der Wärmeübertragung auf den Kraftstoff auch ein Heizelement mit einer Honigwabenstruktur vorgesehen sein, das auslaßseitig ebenfalls offen ist.

Wird ein derartiges Heizelement im Abspritzbereich des Einspritzventils nicht beheizt, so stellt es ein relativ großes Hindernis für den abgespritzten Kraftstoffstrahl dar und stört die Kraftstoffaufbereitung für die Gemischbildung.

Bei üblichen Kraftstoffverdampfern, die im Abspritzbereich eines Einspritzventils angeordnet sind, treten daher Probleme bei der Gemischaufbereitung, also bei der Aufbereitung des Kraftstoffs für die Bildung des Kraftstoffluftgemischs auf, wenn der Kraftstoffverdampfer während des Dauerbetriebs des Verbrennungsmotors elektrisch nicht beheizt wird, da der Kraftstoffverdampfer den vom Einspritzventil erzeugten Kraftstoffstrahl beeinträchtigt und damit den Kraftstoffaustrag stört.

Eine weitere bekannte Kraftstoffeinspritzvorrichtung (DE 20 57 972 C3) umfaßt den einzelnen Brennkammern eines Verbrennungsmotors zugeordnete Einspritzventile, denen von einer Kraftstoffzumeßeinrichtung über Rohrleitungen Kraftstoff zugeführt wird. Der zugeführte Kraftstoff gelangt dabei in eine Ventilkammer des jeweiligen Einspritzventils, die auslaßseitig von einem Auslaßventil abgeschlossen wird. Das Auslaßventil umfaßt dabei einen Ventilkörper, der von einer Feder in seine Schließstellung vorgespannt ist und der vom Kraftstoffdruck in der Ventilkammer geöffnet wird, wenn die von diesem auf den Ventilkörper ausgeübte Kraft die Schließkraft der Feder übersteigt.

Jedes Einspritzventil weist dabei in seinem Innern einen Heizkörper auf, mit dem der im Einspritzventil befindliche Kraftstoff so erwärmt werden kann, daß er auch bei kaltem Motor verdampft, wenn er durch das Auslaßventil ausströmt und im Austrittsbereich des Einspritzventils expandiert.

Aus der US 4,137,872 ist eine Kraftstoffeinspritzvorrichtung für einen Verbrennungsmotor bekannt, die mit einem zumessenden Einspritzventil und mit einem saugrohrseitig vor einer Abspritzöffnung des Einspritzventils angeordneten Kraftstoffverdampfer, der einen Verdampferbereich mit einem zugeordneten elektrischen Heizelement aufweist, ausgestattet ist. Den Verdampferbereich schließt ein Auslassventil auslassseitig ab.

Der kammerartig in einer Gehäusestruktur ausgebildete Verdampferbereich schließt sich an eine Aufnahmeöffnung für das Einspritzventil an, aus dem der zumindest teilweise verdampfte Brennstoff dann weitgehend senkrecht zur Einspritzrichtung des Einspritzventils zum Auslassventil befördert wird. Das Heizelement ragt in den kammerartigen Verdampferbereich, um den in den Verdampferbereich eingespritzten Kraftstoff zu erhitzen und wenigstens teilweise zu verdampfen. Übersteigt der Druck des im Verdampferbereich befindlichen Kraftstoffdampfes einen bestimmten Schwellwert, so öffnet das den Verdampferbereich abschließende Auslassventil, und der verdampfte Kraftstoff wird unmittelbar in Richtung einer Brennkammer abgegeben.

Des weiteren wird in der DE 195 04 175.5, die u.a. als WO 96/24764 nachveröffentlicht ist, eine Vorrichtung zum Zumessen und Zerstäuben von Fluid vorgeschlagen. Diese Abspritzvorrichtung weist einen Grundkörper auf, der eine innere Kammer K umschließt, wobei ein Zulauf Z mit einem Rückstromventil RV und ein Ablauf A mit einem Abspritzventil AV verschließbar sind. In der inneren Kammer ist ein Heizelement H angeordnet, das zum Verdampfen des Fluids vorgesehen ist. Das Rückstromventil RV stellt dabei einen verschließbaren Zulauf dieser Vorrichtung dar. Das in der Kammer K angeordnete Heizelement H kann auch mit mehreren Einzelheizelementen EH ausgestattet sein. Die Heizelemente H sind dabei stets im mittleren Teil der Kammer K angeordnet. Aufgrund der räumlichen Anordnung und des strukturellen Aufbaus des Abspritzventils AV in der Vorrichtung ist eine unmittelbare Zuordnung eines Heizelements zum Abspritzventil AV nicht möglich, so daß über die Strömungslänge des Abspritzventils AV bis zum eigentlichen Abspritzpunkt ED wieder eine Abkühlung des Fluids bzw. des Fluiddampfes erfolgt.

### VORTEILE DER ERFINDUNG

Die erfindungsgemäße Kraftstoffeinspritzvorrichtung mit den kennzeichnenden Merkmalen des Anspruches 1 hat demgegenüber den Vorteil, daß der Kraftstoffverdampfer in allen Heizzuständen, also bei einem Heizbetrieb für Voll- oder Teilverdampfung und im ungeheizten Zustand, eine sehr gute Kraftstoffaufbereitung gewährleistet, da der Kraftstoff stets mit dem voreingestellten Druck austritt. Dabei wird die Zumeßfunktion des standardmäßigen Einspritzventils durch den Kraftstoffverdampfer nicht verändert, da eine konstante Druckdifferenz zwischen dem Kraftstoffdruck im Einspritzventil und dem Druck im Kraftstoffverdampfer durch den Öffnungsdruck des Auslaßventils sichergestellt ist.

In vorteilhafter Weise besitzt die erfindungsgemäße Kraftstoffeinspritzvorrichtung ein erstes Heizelement, das dem unmittelbar stromabwärts der Abspritzöffnung des Einspritzventils liegenden Verdampferbereich zugeordnet ist, und ein zweites am Auslassventil unmittelbar angeordnetes elektrisches Heizelement unabhängig von dem wenigstens einen ersten Heizelement. Dabei ist es von Vorteil, daß der ausströmende, teils dampfförmige, teils flüssige, heiße Kraftstoff von dem zweiten Heizelement und dem davon aufgeheizten Auslassventil zusätzlich aufgeheizt wird. Die Verdampfung des Kraftstoffs wird über die Länge des Auslassventils effektiv aufrechterhalten.

Mit der erfindungsgemäßen Kraftstoffeinspritzvorrichtung lassen sich daher sowohl die Schadstoffemissionen insbesondere beim Kaltstart und während der Warmlaufphase als auch der Kraftstoffverbrauch verringern, da eine Start- und Beschleunigungsanreicherung des Kraftstoffluftgemischs wegfällt.

Da der gesamte Heizbereich im Kraftstoffverdampfer immer wieder mit flüssigem Kraftstoff gespült wird, lassen sich Ablagerungen sicher verhindern.

Die Gefahr einer Selbstentzündung des Kraftstoffs im Heizbereich des Kraftstoffverdampfers, also im Verdampferbereich, ist praktisch beseitigt, da dort nur Kraftstoff und/oder Kraftstoffdampf vorliegt.

Durch die in den Unteransprüchen aufgeführten Maßnahmen sind vorteilhafte Ausgestaltungen und Verbesserungen der im Anspruch 1 angegebenen Kraftstoffeinspritzvorrichtung möglich.

Ist bei der erfindungsgemäßen Kraftstoffeinspritzvorrichtung ein den Kraftstoffverdampfer umfassender Gaskanal vorgesehen, so läßt sich auch bei abgeschalteter elektrischer Heizung eine Aufheizung des Kraftstoffs während des Dauerbetriebs des Verbrennungsmotors sicherstellen, wenn dem Gaskanal heiße Abgase vom Verbrennungsmotor zugeführt werden. Wird anstelle dessen Luft in den Gaskanal eingeleitet, so werden flüssig aus dem Auslaßventil austretende Kraftstoffanteile durch den Luftstrom sehr fein zerstäubt.

Neben der Verwendung von PTC-Heizelementen, also von Heizelementen mit positiven Temperaturkoeffizienten, können auch NTC-Heizelemente, also Heizelemente mit negativen Temperaturkoeffizienten, eingesetzt werden, die von einer externen Steuereinrichtung geregelt werden können. Die Verwendung von NTC-Heizelementen ist dabei hinsichtlich der Herstellungskosten und Toleranzen von Vorteil und insbesondere dann wirtschaftlich, wenn aufgrund verschiedener Kraftstoffdurchsätze eine externe Temperaturregelung für die Heizelemente ohnehin erforderlich ist.

Da sich der Kraftstoffverdampfer ohne weiteres an beliebige Einspritzventile anpassen läßt, kann die erfindungsgemäße Kraftstoffeinspritzvorrichtung jedes gängige Einspritzventil mit Zumeßfunktion verwenden.

### ZEICHNUNG

Ausführungsbeispiele der Erfindung sind in der Zeichnung vereinfacht dargestellt und in der nachfolgenden Beschreibung näher erläutert. Es zeigen:
- Fig. 1: einen schematischen Schnitt durch eine erfindungsgemäße Kraftstoffeinspritzvorrichtung,
- Fig. 2: einen schematischen Schnitt durch einen Kraftstoffverdampfer einer erfindungsgemäßen Kraftstoffeinspritzvorrichtung mit einer anderen Ausführungsform der Heizelemente und
- Fig. 3: einen schematischen Schnitt durch einen Kraftstoffverdampfer einer erfindungsgemäßen Kraftstoffeinspritzvorrichtung mit einer weiteren Ausführungsform der Heizelemente.

In den verschiedenen Figuren der Zeichnung sind einander entsprechende Teile mit gleichen Bezugszeichen versehen.

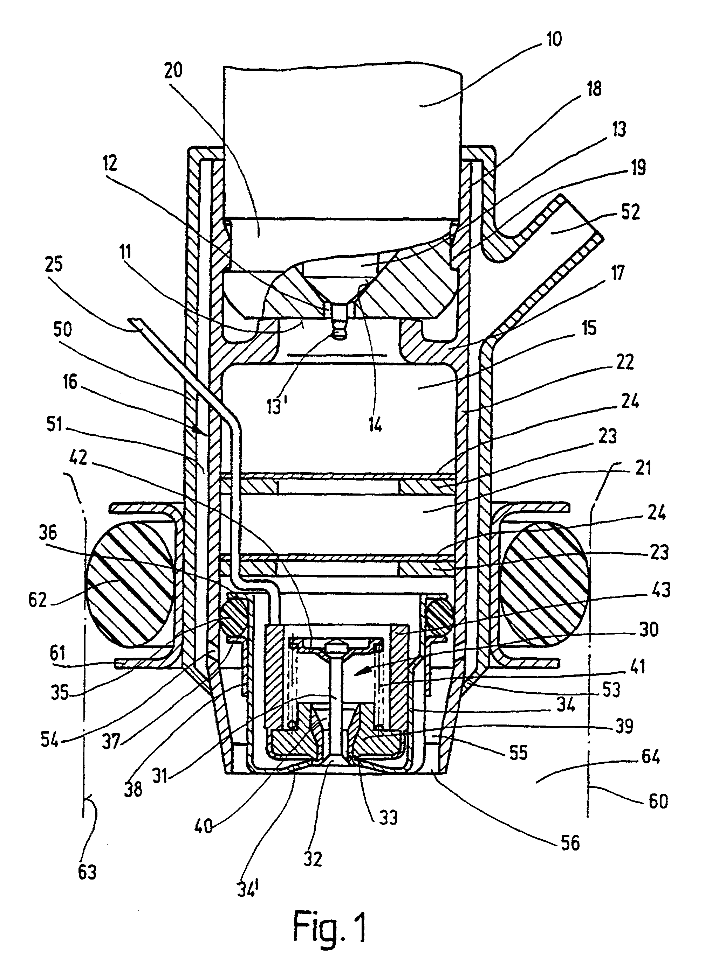

Wie Fig. 1 zeigt, weist eine Kraftstoffeinspritzvorrichtung für einen Verbrennungsmotor ein kraftstoffzumessendes Einspritzventil 10 auf, das in üblicher Weise in seiner auslaßseitigen Stirnfläche 11 eine Abspritzöffnung 12 aufweist, der ein mit einer Ventilnadel 13 zusammenwirkender Ventilsitz 14 zugeordnet ist.

Im dargestellten Ausführungsbeispiel weist die Ventilnadel 13 einen sich durch die Abspritzöffnung 12 hindurch erstreckenden Spritzzapfen 13' auf, der bei geöffnetem Einspritzventil 10 zur Formung einer abgespritzten Kraftstofflamelle so in der Austrittsöffnung 12 angeordnet ist, daß die in einen Abspritzbereich 15 abgespritzte Kraftstofflamelle im wesentlichen kegelmantelförmig ist. Die Ausbildung der Kraftstofflamelle oder eines in anderer gewünschter Weise geformten, ein- oder mehrteiligen Kraftstoffstrahls kann aber auch auf andere Weise erreicht werden. So ist es z. B. möglich, eine Spritzlochscheibe mit einem oder mehreren Spritzlöchern vorzusehen oder die Austrittsöffnung als Ringspalt auszubilden.

Auf das saugrohrseitige Ende des Einspritzventils 10 ist ein Kraftstoffverdampfer 16 dicht aufgesetzt, der ein Gehäuse 17 mit einem hülsenförmigen Montageabschnitt 18 umfaßt. Ein am Innenumfang des Montageabschnitts 18 ausgebildeter Ringsteg 19 greift in eine am saugrohrseitigen Ende des Einspritzventils 10 vorgesehene Ringnut 20 ein und hält so den Kraftstoffverdampfer 16 dicht am Einspritzventil 10. Die Befestigung des Kraftstoffverdampfers 16 kann auch in anderer Weise erfolgen. Z. B. ist es auch möglich am Einspritzventil 10 einen Ringsteg auszubilden, der dann von einem sich radial nach innen erstreckenden Ringflansch umgriffen wird oder der in eine geeignete, innen am Montageabschnitt 18 vorgesehene Ringnut eingreift. Denkbar ist auch eine dichte Preßsitzverbindung zwischen Kraftstoffverdampfer 16 und Einspritzventil 10.

An den Montageabschnitt 18 des Gehäuses 17 schließt sich eine sich vom Einspritzventil 10 weg erstreckende, den freien Abspritzbereich 15 des Einspritzventils 10 und einen daran anschließenden Verdampferbereich 21 umfangsmäßig umgebende Aufnahmehülse 22 an, in der zwei Heizelemente 23 in deren Axialrichtung mit Abstand zueinander angeordnet und mittels metallischen Halteteilen 24 mechanisch gehalten und elektrisch mit Masse verbunden sind. Die Halteteile 24 sind dabei so ausgebildet, daß sie die Wärmeübertragung von den Heizelemeten 23 auf den abgespritzten Kraftstoff unterstützen, das Einströmen von Kraftstoff in den Verdampferbereich 21 jedoch nicht beeinträchtigen.

Die Heizelemente 23 sind dabei zur Stromversorgung über eine elektrische Leitung 25, die elektrisch isoliert, aber gasdicht in das Gehäuse 17 eingeführt ist, mit einer nicht dargestellten Spannungsquelle verbunden.

Wie in Fig. 1 dargestellt, bestehen die Heizelemente 23 aus Ringscheiben. Es sind aber auch andere geometrische Ausgestaltungen der Heizelemente 23 denkbar.

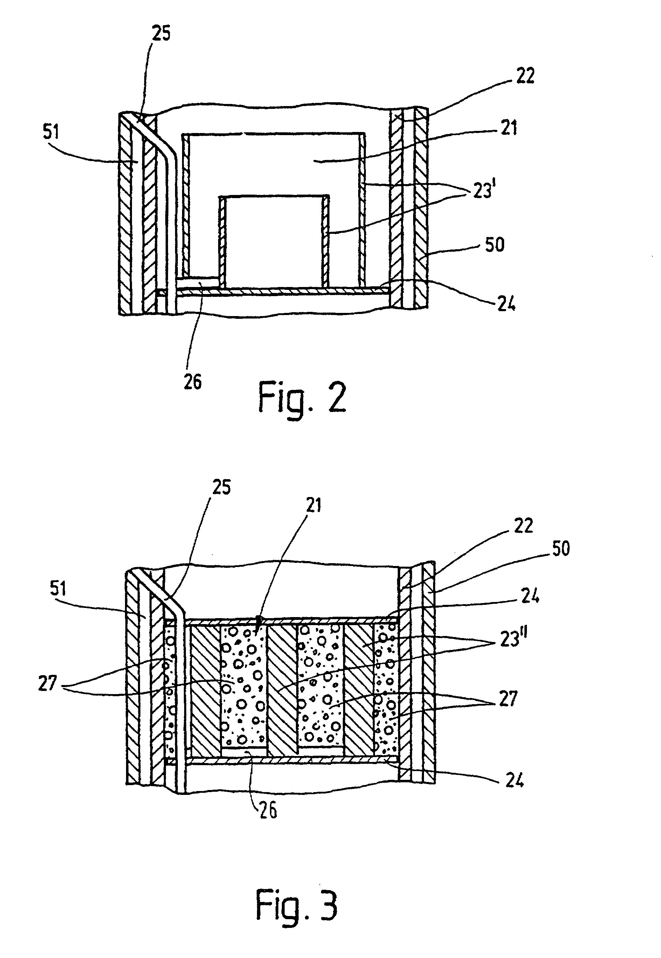

Fig. 2 zeigt beispielsweise zwei hülsenförmige Heizelemente 23', die koaxial zueinander und zu der Aufnahmehülse 22 angeordnet und von einem gemeinsamen Halteteil 24 gehalten sind. Das Halteteil 24 ist dabei auf der vom Einspritzventil 10 abgewandten Seite der Heizelemente 23' vorgesehen und in nicht näher dargestellter Weise so ausgebildet, daß es den Austritt von Kraffstoffdampf aus dem Verdampferbereich 21 nicht behindert. Zweckmäßigerweise ist das innere Heizelement 23' in Axialrichtung kürzer ausgebildet als das äußere. Zum elektrischen Anschluß sind die Heizelemente 23' über eine Zweigleitung 26 mit der Leitung 25 verbunden.

Fig. 3 zeigt eine weitere Ausbildung der Heizelemente 23, bei der die Heizelemente 23" konzentrisch zueinander und zur Aufnahmehülse 22 angeordnet sind. Die beiden Heizelemete 23" sind dabei an ihren axialen Enden an Halteteilen 24 gehalten. Der Verdampferbereich 21 zwischen den Heizelementen 23" ist dabei mit einem porösen Material 27, z. B. mit poröser Keramik oder feiner Metallwolle, gefüllt, um die Wärmeübertragung auf den Kraftstoff weiter zu verbessern.

Unabhängig von ihrem geometrischen Aufbau können die einzelnen Heizelemente 23, 23' und 23" aus einem PTC-Widerstandsmaterial, also aus einem Widerstandsmaterial mit einem positiven Temperaturkoeffizienten bestehen. Es ist aber auch möglich, ein NTC-Widerstandsmaterial, also ein Widerstandsmaterial mit negativem Temperaturkoeffizienten zu verwenden. In diesem Fall ist es erforderlich, eine externe Temperaturregelung vorzusehen. Hierfür wird einer nicht dargestellten Temperatursteuereinrichtung, die in einem Steuergerät für den Verbrennungsmotor integriert sein kann, ein der Temperatur der Heizelemente 23, 23' und 23" entsprechendes Temperatursignal zugeführt. Zur Bildung des Temperatursignals kann dabei entweder der temperaturabhängige Innenwiderstand der Heizelemente 23, 23' und 23" verwendet werden, oder es wird ein in der Zeichnung nicht dargestellter Temperaturfühler an einem der Heizelemente 23, 23' und 23" angeordnet.

Die Verwendung von Heizelementen 23, 23' und 23" aus einem NTC-Widerstandsmaterial ist insbesondere dann von Vorteil, wenn aufgrund unterschiedlicher Kraftstoffdurchsätze eine Temperaturregelung für die Heizelemente 23, 23' und 23" ohnehin erforderlich ist.

In Ausströmrichtung des erzeugten Kraftstoffdampfes ist hinter dem Verdampferbereich 21, also auf der vom Einspritzventil 10 abgewandten Seite der Heizelemente 23, 23' und 23" ein vorzugsweise druckgeregeltes Auslaßventil 30 angeordnet, daß den Verdampferbereich 21 auslaßseitig abschließt.

Das Auslaßventil 30, das einen nadelförmigen Ventilkörper 31 mit einem Schließkopf 32 an seinem vom Einspritzventil 10 abgewandten Ende und einen Ventilsitz 33 umfaßt, ist in einer Haltehülse 34 angeordnet, die auf ihrer Außenseite einen im montierten Zustand innen an der Aufnahmehülse 22 anliegenden Dichtring 35 trägt, der zwischen einem radial nach außen vorstehenden Flansch 36 der Haltehülse 34 und einem ebenfalls nach außen vorstehenden Flansch 37 einer außen auf der Haltehülse 34 angeordneten Stützhülse 38 eingesetzt ist. An ihrem auslaßseitigen Ende weist die Haltehülse 34 einen sich radial nach innen erstreckenden Halteflansch 34' auf, an dem ein den Ventilsitz 33 tragender Ventilsitzkörper 39 befestigt ist.

Der sich durch eine vom Ventilsitz 33 umgebene Durchgangsöffnung 40 im Ventilsitzkörper 39 hindurch erstreckende Ventilkörper 31 wird von einer Schließfeder 41, die zweckmäßigerweise als Druckfeder ausgebildet ist und zwischen den Ventilsitzkörper 39 und eine am vom Schließkopf 32 abgewandten Ende des Ventilkörpers 31 angeordnete Stützscheibe 42 eingespannt ist, auf das Einspritzventil 10 hin in seine Schließstellung vorgespannt, in welcher der dem Außenbereich des Auslaßventils 30 zugeordnete Schließkopf 32 am Ventilsitz 33 anliegt.

Die von der Schließfeder 41 erzeugte Ventilschließkraft wird so voreingestellt, daß das Auslaßventil 30 bei einem inneren Druck von 2000 hPa bis 4000 hPa öffnet.

Anstelle der mechanischen erzeugten Schließkraft könnte auch eine magnetische Schließkraft vorgesehen sein, die z. B. von einem Dauermagneten bereitgestellt wird.

Dem Auslaßventil 30 ist ein weiteres, hülsenförmiges Heizelement 43 zugeordnet, das auf dem Ventilsitzkörper 39 angebracht ist und den Ventilkörper 31 sowie die Schließfeder 41 umgibt. Das Heizelement 43 ist einerseits mit der elektrischen Leitung 25 und andererseits mit einem Außenumfangsabschnitt mit der Haltehülse 34 verbunden.

Wie in Fig. 1 weiter dargestellt ist, kann wahlweise eine das Gehäuse 17 umfassende Mantelhülse 50 vorgesehen sein, die mit dem Gehäuse 17 zusammen einen ringzylinderförmigen Gaskanal 51 bildet, dem einlaßseitig Luft oder vorzugsweise vom Verbrennungsmotor rückgeführtes Abgas über einen Anschlußstutzen 52 zuführbar ist. Am auslaßseitigen Ende ist die Mantelhülse 50 flanschartig nach innen umgebogen und liegt mit dem umgebogenen Abschnitt 53 dicht am Gehäuse 17 an. Das Gehäuse 17 weist an seinem vom Einspritzventil 10 abgewandten Ende in Kraftstoffabspritzrichtung gesehen hinter dem Anlagebereich des Dichtrings 35 eine Vielzahl von Auslaßöffnungen 54 auf, die beispielsweise umfangsmäßig in gleichen Abständen angeordnet sind.

Um einen Luft- oder Abgasstrom außen entlang der Haltehülse 34 zu führen, erstreckt sich das vom Einspritzventil 10 abgewandte Ende des Gehäuses 17 bzw. der Aufnahmehülse 22 bis zum vorderen Ende der Haltehülse 34 für das Auslaßventil 30 und bildet so zusammen mit der Haltehülse 34 einen diese umgebenden ringzylinderartigen Austrittskanal 55. Der als Gasleitwand für den Luft- oder Abgasstrom dienende vordere Abschnitt der Aufnahmehülse 22, der den Austrittskanal 55 außen umgibt, kann dabei leicht konisch nach innen zulaufend sein.

Der den Kraftstoffverdampfer 16 umfassende Gaskanal 51 ist dabei zusammen mit den Auslaßöffnungen 54 so ausgelegt, daß zugeführte Luft oder vom Verbrennungsmotor rückgeführtes Abgas mit hoher Geschwindigkeit aus einer zwischen Haltehülse 34 und Aufnahmehülse 22 gebildeten, ringspaltförmigen Gasausaustrittsöffnung 56 austritt.

Zum Einbau der beschriebenen Kraftstoffeinspritzvorrichtung in eine in Fig. 1 nur gestrichelt angedeutete Wand eines Saugrohres 60 ist ein im Querschnitt U-förmiger, radial nach außen offener Haltering 61 auf der Mantelhülse 50 vorgesehen, in den ein Dichtring 62 eingelegt ist, der im eingebauten Zustand an einer Innenwand 63 einer entsprechenden Öffnung 64 im Saugrohr 60 dicht anliegt. Der Haltering 61 dient dabei zusammen mit dem Dichtring 62 als Wärmeisolation zwischen dem Kraftstoffverdampfer 16 und dem Saugrohr 60 des Verbrennungsmotors. Falls die Mantelhülse 50 zur Bildung des den Kraftstoffverdampfer 16 umfassenden Gaskanals 51 nicht vorgesehen ist, wird der Haltering 61 unmittelbar auf das Gehäuse 17 aufgesetzt.

Beim Betrieb des Verbrennungsmotors werden nach dem Starten während der Warmlaufphase die Heizelemente 23, 23' bzw. 23" im Verdampferbereich sowie das dem Auslaßventil 30 zugeordnete Heizelement 43 elektrisch geheizt. Vom kraftstoffzumessenden Einspritzventil 10 in den Abspritzbereich 15 im Kraftstoffverdampfer 16 gespritzter Kraftstoff gelangt von dort in den Verdampferbereich 21, wobei er auf die Heizelemente 23, 23', 23", die Halteteile 24 und bei der Ausführung nach Fig. 3 auch auf das poröse Material 27 im Verdampferbereich 21 auftrifft, aufgeheizt und zumindest teilweise verdampft wird. Je nach der Form des abgespritzten Kraftstoffstrahls kann auch ein Teil des flüssigen Kraftstoffs auf die Innenfläche der Aufnahmehülse 22 auftreffen. Dort wird er, wenn die Aufnahmehülse 22 genügend aufgeheizt ist, ebenfalls verdampft.

Durch die Kraftstoffverdampfung steigt der Druck im Inneren des Kraftstoffverdampfers 16 an bis der voreingestellte Öffnungsdruck erreicht ist, das Auslaßventil 30 öffnet und Kraftstoff ausströmt. Der ausströmende, teils dampfförmige, teils flüssige, heiße Kraftstoff wird von dem Heizelement 43 und dem davon aufgeheizten Auslaßventil 30 zusätzlich aufgeheizt.

Beim Ausströmen des unter definiertem Druck stehenden, heißen Kraftstoff-Kraftstoffdampf-Gemischs in das Saugrohr 60 wird durch die Expansion zusätzlich flüssiger Kraftstoff verdampft. Um das Dampf-Flüssigkeits-Verhältnis des Kraftstoffs im Saugrohr auf den Wert einzuregeln, der erforderlich ist, um ein für den Betrieb des Verbrennungsmotors optimales Kraftstoffluftgemisch bereitzustellen, sind die Heizelemente 23, 23' bzw. 23" entsprechend ausgelegt und/oder werden von der Temperatursteuereinrichtung entsprechend gesteuert.

Ein wesentlicher Vorteil des erfindungsgemäßen Kraftstoffverdampfers 16 besteht darin, daß das Einspritzen von flüssigem Kraftstoff und das Auslassen des heißen Kraftstoff-Kraftstoffdampf-Gemischs ohne Beeinträchtigung der Kraftstoffzumessung zeitlich überlappen kann, ohne daß die Zumeßfunktion des Einspritzventils 10 beeinträchtigt wird.

Auch bei abgeschalteten Heizelementen 23, 23' bzw. 23" steigt der Druck im Kraftstoffverdampfer 16 bis auf den Öffnungsdruck an, da vom Einspritzventil 10 Kraftstoff mit höherem Druck eingespritzt wird. Erreicht der Kraftstoffdruck im Kraftstoffverdampfer bei abgeschalteter Heizung den Öffnungsdruck, so tritt der im wesentlichen flüssige Kraftstoff unter diesem voreingestellten, definierten Druck zwischen typischerweise 2000 hPa und 4000 hPa aus und zerstäubt, so daß durch den Kraftstoffverdampfer 16 mit vom Auslaßventil 30 abgeschlossenen Verdampferbereich 21 weder der Kraftstoffaustrag noch die Kraftstoffaufbereitung beeinträchtigt werden.

Wird während des Dauerbetriebs des Verbrennungsmotors dem wahlweise vorgesehenen Gaskanal 51 heißes Abgas vom Verbrennungsmotor zugeführt, so wird der Kraftstoffverdampfer 16 dadurch aufgeheizt, und es läßt sich eine Kraftstoffverdampfung ohne zusätzliche elektrische Heizung erreichen. Andererseits läßt sich bei der Einleitung von Luft in den Gaskanal 51 die Kraftstoffzerstäubung unterstützen.

Durch die Ausnutzung der Druckabstufungen zwischen dem Druck im Einspritzventil 10 und dem Auslaßdruck des Kraftstoffverdampfers 16 sowie zwischen dem Auslaßdruck und dem Druck im Saugrohr 60 läßt sich die kraftstoffzumessende Funktion des Einspritzventils 10, also die einspritzzeitabhängig zugemessene Kraftstoffmenge, unverändert beibehalten.

## Patentansprüche

1. Kraftstoffeinspritzvorrichtung für einen Verbrennungsmotor mit einem zumessenden Einspritzventil (10) und mit einem saugrohrseitig vor einer Abspritzöffnung (12) des Einspritzventils (10) angeordneten Kraftstoffverdampfer (16), der einen Verdampferbereich (21) mit zumindest einem zugeordneten elektrischen Heizelement (23, 23', 23") aufweist, sowie mit einem den Verdampferbereich (21) auslassseitig abschließenden Auslassventil (30),
**dadurch gekennzeichnet,**
**dass** das dem Verdampferbereich (21) zugeordnete wenigstens eine Heizelement (23, 23', 23") als ein erstes Heizelement (23, 23', 23'') ausgebildet ist und dass am Auslassventil (30) unmittelbar ein zweites elektrisches Heizelement (43) unabhängig von dem wenigstens einen ersten Heizelement (23, 23', 23") angeordnet ist.

2. Kraftstoffeinspritzvorrichtung nach Anspruch 1,
**dadurch gekennzeichnet, dass** das Auslassventil (30) einen Ventilkörper (31) aufweist, der von einer vorzugsweise einstellbaren Schließkraft in seine Schließstellung gedrängt wird und vom Druck im Kraftstoffverdampfer (16) in seine Offen-Stellung bewegbar ist, wenn die vom Druck bewirkte Kraft auf den Ventilkörper (31) die Schließkraft übersteigt.

3. Kraftstoffeinspritzvorrichtung nach Anspruch 2,
**dadurch gekennzeichnet, dass** das dem Auslassventil (30) zugeordnete zweite Heizelement (43) mit einem Ventilsitzkörper (39) verbunden ist und den Ventilkörper (31) sowie ein die Schließkraft erzeugendes Element, vorzugsweise eine Schließfeder (41), ringzylinderförmig umgibt.

4. Kraftstoffeinspritzvorrichtung nach einem der vorhergehenden Ansprüche,
**dadurch gekennzeichnet, dass** das wenigstens eine erste Heizelement (23, 23', 23") aus einem Widerstandsmaterial mit positivem Temperaturkoeffizienten aufgebaut ist.

5. Kraftstoffeinspritzvorrichtung nach einem der Ansprüche 1 bis 3,
**dadurch gekennzeichnet, dass** das wenigstens eine erste Heizelement (23, 23', 23'') aus einem Widerstandsmaterial mit negativem Temperaturkoeffizienten aufgebaut ist.

6. Kraftstoffeinspritzvorrichtung nach Anspruch 4 oder 5,
**dadurch gekennzeichnet, dass** dem wenigstens einen ersten Heizelement (23, 23', 23'') eine Temperatursteuereinrichtung zugeordnet ist, die zur Temperaturregelung den dem wenigstens einen ersten Heizelement (23, 23', 23'') zugeführten Heizstrom steuert und der ein der Heizelementtemperatur entsprechendes Temperatursignal zuführbar ist.

7. Kraftstoffeinspritzvorrichtung nach Anspruch 6,
**dadurch gekennzeichnet, dass** zur Bildung des Temperatursignals ein zumindest einem der ersten Heizelemente (23, 23', 23'') zugeordneter Temperaturfühler vorgesehen ist.

8. Kraftstoffeinspritzvorrichtung nach einem der vorhergehenden Ansprüche,
**dadurch gekennzeichnet, dass** im Verdampferbereich (21) zumindest zwei erste Heizelemente (23, 23', 23'') angeordnet sind und dass der freie Raum zwischen den ersten Heizelementen (23, 23', 23'') mit einem porösen Material (27), vorzugsweise mit poröser Keramik oder mit feiner Metallwolle gefüllt ist, das in Wärmekontakt mit den ersten Heizelementen (23, 23', 23") ist.

9. Kraftstoffeinspritzvorrichtung nach einem der vorhergehenden Ansprüche,
**dadurch gekennzeichnet, dass** der Kraftstoffverdampfer (16) von einem Gaskanal (51) umfasst ist, dem eingangsseitig Luft oder vorzugsweise rückgeführtes Abgas zuführbar ist und der in einen eine Haltehülse (34) des Auslassventils (30) umgebenden ringzylinderartigen Austrittskanal (55) mündet, dessen ringspaltförmige Gasaustrittsöffnung (56) mit einem Auslass einer Durchgangsöffnung (40) des Auslassventils (30) im wesentlichen in einer Ebene liegt.

10. Kraftstoffeinspritzvorrichtung nach Anspruch 9,
**dadurch gekennzeichnet, dass** die Gasführungsmittel bestehend aus Gaskanal (51) und Austrittskanal (55) sowohl das wenigstens eine erste Heizelement (23, 23', 23'') als auch das zweite Heizelement (43) umgeben.

## Claims

1. Fuel injection device for an internal combustion engine having a metering injection valve (10) and fuel vaporizer (16) which is arranged on the intake manifold end upstream of an ejection opening (12) of the injection valve (10) and which has a vaporizer region (21) with at least one assigned electrical heating element (23, 23', 23"), and having an outlet valve (30) which shuts off the vaporizer region (21) at the outlet end, **characterized in that** the at least one heating element (23, 23', 23'') which is assigned to the vaporizer region (21) is embodied as a first heating element (23, 23', 23"), and **in that** a second electrical heating element (43) is arranged directly on the outlet valve (30), independently of the at least one first heating element (23, 23', 23").

2. Fuel injection device according to Claim 1, **characterized in that** the outlet valve (30) has a valve body (31) which is forced into its closed position by a preferably adjustable closing force and can be moved into its open position by the pressure in the fuel vaporizer (16) if the force on the valve body (31) which is exerted by the pressure exceeds the closing force.

3. Fuel injection device according to Claim 2, **characterized in that** the second heating element (43) which is assigned to the outlet valve (30) is connected to a valve seat body (39) and surrounds the valve body (31) and an element, preferably a closing spring (41) which generates the closing force, in the shape of an annular cylinder.

4. Fuel injection device according to one of the preceding claims, **characterized in that** the at least one first heating element (23, 23', 23'') is formed from a resistant material with a positive temperature coefficient.

5. Fuel injection device according to one of Claims 1 to 3, **characterized in that** the at least one first heating element (23, 23', 23'') is formed from a resistant material with a negative temperature coefficient.

6. Fuel injection device according to Claim 4 or 5, **characterized in that** the at least one first heating element (23, 23', 23") is assigned a temperature controller which, in order to regulate the temperature, controls the heating current fed to the at least one first heating element (23, 23', 23") and to which a temperature signal which corresponds to the heating element temperature can be fed.

7. Fuel injection device according to Claim 6, **characterized in that** in order to form the temperature signal a temperature sensor which is assigned to at least one of the first heating elements (23, 23', 23") is provided.

8. Fuel injection device according to one of the preceding claims, **characterized in that** at least two first heating elements (23, 23', 23'') are arranged in the vaporizer region (21), and **in that** the free space between the first heating elements (23, 23', 23") is filled with a porous material (27), preferably with porous ceramic or with fine metal wool, which is in thermal contact with the first heating elements (23, 23', 23'').

9. Fuel injection device according to one of the preceding claims, **characterized in that** the fuel vaporizer (16) is surrounded by a gas duct (51) into which air or preferably fed-back exhaust gas can be fed at the input end and which opens into an annular cylinder-like outlet duct (55) which surrounds a securing sleeve (34) of the outlet valve (30) and whose annular gap-shaped gas outlet opening (56) lies essentially in a plane with an outlet of a passage opening (40) of the outlet valve (30).

10. Fuel injection device according to Claim 9, **characterized in that** the gas conduction means composed of the gas duct (51) and outlet duct (55) surround both the at least one first heating element (23, 23', 23'') and the second heating element (43).

## Revendications

1. Dispositif d'injection de carburant pour un moteur à combustion interne comprenant un injecteur (10) de dosage et un évaporateur de carburant (16) installé du côté de la tubulure d'aspiration, devant l'orifice d'éjection (12) de l'injecteur (10), cet évaporateur ayant une zone d'évaporation (21) avec au moins un élément chauffant électrique (23, 23', 23") et une soupape d'éjection (30) qui ferme la zone d'évaporation (21) du côté de la sortie,
**caractérisé en ce que**
l'élément chauffant (23, 23', 23") associé à la zone d'évaporation (21) est réalisé comme premier élément chauffant (23, 23', 23") et au niveau de la soupape d'éjection (30) on a directement un second élément chauffant électrique (43), installé indépendamment d'au moins un premier élément chauffant (23, 23', 23").

2. Dispositif d'injection de carburant selon la revendication 1,
**caractérisé en ce que**
la soupape d'éjection (30) comporte un corps de soupape (31) poussé de préférence par un ressort de fermeture réglable dans sa position de fermeture et qui est déplacé par la pression de l'évaporateur de carburant (16) dans sa position d'ouverture lorsque la force engendrée par la pression exercée sur le corps de soupape (31) dépasse la force de fermeture.

3. Dispositif d'injection de carburant selon la revendication 2,
**caractérisé en ce que**
le second élément chauffant (43) associé à la soupape d'éjection (30) est relié à un corps formant siège de soupape (39) et entoure suivant une forme de cylindre annulaire le corps de soupape (31) ainsi qu'un élément générant la force de fermeture de préférence un ressort de fermeture (41).

4. Dispositif d'injection de carburant selon l'une quelconque des revendications précédentes,
**caractérisé en ce qu'**
au moins un premier élément chauffant (23, 23', 23") est réalisé en une matière résistante ayant un coefficient de température positif.

5. Dispositif d'injection de carburant selon l'une quelconque des revendications 1 à 3,
**caractérisé en ce qu'**
au moins un premier élément chauffant (23, 23', 23") est réalisé en une matière résistante ayant un coefficient de température négatif.

6. Dispositif d'injection de carburant selon l'une quelconque des revendications 4 ou 5,
**caractérisé en ce qu'**
au moins l'un des premiers éléments chauffants (23, 23', 23") comporte une installation de commande de température servant à la régulation du courant de chauffage alimentant au moins un premier élément chauffant (23, 23', 23") et recevant le signal de température correspondant à la température de l'élément chauffant.

7. Dispositif d'injection de carburant selon la revendication 6,
**caractérisé en ce que**
pour former le signal de température, il est prévu au moins un capteur de température associé à l'un des premiers éléments chauffants (23, 23', 23").

8. Dispositif d'injection de carburant selon l'une quelconque des revendications précédentes,
**caractérisé en ce que**
dans la zone d'évaporation (21) il y a au moins deux premiers éléments chauffants (23, 23', 23") et le volume libre compris entre les premiers éléments chauffants (23, 23', 23") est rempli d'une matière poreuse (27) de préférence de la céramique poreuse ou de la laine métallique fine favorisant le contact thermique avec les premiers éléments chauffants (23, 23', 23").

9. Dispositif d'injection de carburant selon l'une quelconque des revendications précédentes,
**caractérisé en ce que**
l'évaporateur de carburant (16) est entouré par un canal de gaz (51) dont l'entrée reçoit de l'air et de préférence des gaz d'échappement ré-injectés et cet évaporateur débouche dans un canal de sortie (55) annulaire cylindrique entourant le manchon de fixation (34) de la soupape d'éjection (30), canal dont l'orifice de sortie de gaz (56), de forme annulaire, se situe essentiellement dans un plan avec une sortie d'un orifice traversant (40) de la soupape d'éjection (30).

10. Dispositif d'injection de carburant selon la revendication 9,
**caractérisé en ce que**
les moyens de guidage de gaz formés du canal de gaz (51) et du canal de sortie (55) entourent à la fois au moins un premier élément chauffant (23, 23', 23") et un second élément chauffant (43).
